# FASCICULE DE BREVET EUROPEEN

(11) **EP 1 151 334 B1**
(45) Date de publication et mention de la délivrance du brevet: **11.09.2002**
(21) Numéro de dépôt: 00902712.9
(22) Date de dépôt: 07.02.2000
(51) Int. Cl.: G02B 6/26

(54) **DISPOSITIF D'ATTENUATION EN LIGNE POUR FIBRE MONOMODE ET PROCEDE DE FABRICATION ASSOCIE**
DÄMPFUNGSGLIED FÜR MONOMODEFASER UND ZUGEHÖRIGES HERSTELLUNGSVERFAHREN
LINE ATTENUATION DEVICE FOR MONOMODE FIBRES AND ASSOCIATED METHOD FOR THE PRODUCTION THEREOF

(30) Priorité: 08.02.1999 FR 9901455
(43) Date de publication de la demande: 07.11.2001
(73) Titulaire: FRANCE TELECOM, 75015 Paris (FR)
(72) Inventeur: CHANCLOU, Philippe, F-22450 Troguery (FR); THUAL, Monique, F-22560 Trebeurden (FR); LOSTEC, Jean, F-22140 Prat (FR)
(74) Mandataire: Ballot, Paul
(86) Numéro de dépôt international: FR0000277
(87) Numéro de publication internationale: WO00048028

(56) Documents cités:
- EP-A- 0 161 826
- EP-A- 0 415 516
- EP-A- 0 491 366
- EP-A- 0 575 993
- WO-A-93/13437
- DE-A- 3 740 378
- US-A- 5 095 519
- US-A- 5 581 649
- US-A- 5 633 974
- PATENT ABSTRACTS OF JAPAN vol. 011, no. 335 (P-632), 4 novembre 1987 (1987-11-04) & JP 62 119503 A (SEIKO INSTR & ELECTRONICS LTD), 30 mai 1987 (1987-05-30)
- B. BRILEY: "An introduction to fiber optics system design" 1990 , ELSEVIER , AMSTERDAM XP002115799 * chapitre 2.5, partie 'Modal Dispersion', page 42, lignes 10 -14 * figures 2-17

## Description

L'invention concerne un dispositif d'atténuation en ligne pour fibre monomode. Elle concerne également un procédé de fabrication d'un tel dispositif.

Le domaine de l'invention est celui des télécommunications optiques et plus particulièrement celui des réseaux de distribution.

Les réseaux de distribution concernent des liaisons de courtes distances et nécessitent des efforts importants en termes de coût tant au niveau des infrastructures que des composants. C'est dans ce contexte que l'invention se situe.

On rappelle que l'on peut être amené à utiliser des atténuateurs optiques notamment pour obtenir une égalisation des puissances du signal de plusieurs voies de communication. On peut également utiliser de tels atténuateurs pour réaliser des interféromètres optiques. On peut également être amené à utiliser des atténuateurs optiques en laboratoire pour simuler des lignes de transmission optique.

Les atténuateurs fixes en ligne sur fibre optique les plus couramment utilisés sont ceux qui utilisent les techniques suivantes :
- le décalage transversal de deux fibres lors de leur soudure. Cette technique est décrite dans le document WO 931 437 ;
- l'utilisation de la courbure de la fibre pour atténuer le signal. Une telle technique est décrite dans le document US 5,581/649 ;
- l'amincissement de la fibre ;
- l'utilisation d'une section de fibre dopée atténuatrice entre deux fibres monomodes. Cette technique est décrite dans le document US 5,633,974 ;
- une section de silice pure non dopée sans guide, soudée entre deux fibres monomodes. Cette technique est décrite dans le document US 5,095,519 ;
- une section de fibre à gradient d'indice maintenue par une ferrule entre deux fibres optiques. Cette technique est décrite dans le document JP 62 119503 A.

La technologie des atténuateurs qui utilise le principe du décalage ou de l'amincissement n'est pas compatible avec des procédés de fabrication en grande série.

Les atténuateurs fonctionnant sur le principe de l'utilisation d'un rayon de courbure ou d'une section dopée nécessitent une mise en oeuvre assez complexe. Et la technique des atténuateurs à section de fibre non dopée ne permet pas d'avoir des tolérances de fabrication très larges.

De même, outre la complexité introduite au niveau de la connexion des fibres par la ferrule, l'atténuateur à section de fibre à gradient d'indice n'est pas adapté à une réalisation collective et ne permet pas d'avoir des tolérances de fabrication très larges.

De plus, l'introduction de l'optique comme moyen de transmission dans les réseaux de distribution nécessite de réduire le coût des composants. C'est donc dans ce contexte que les inventeurs ont imaginé une fonction d'atténuation sur fibre optique, simple à réaliser et de manière reproductible, économique et collective (à partir des rubans de fibres).

L'atténuateur en ligne, conforme à l'invention, a l'avantage de ne pas modifier l'aspect extérieur et les paramètres géométriques et mécaniques de la fibre optique. La valeur de l'atténuation est donnée avec une marge ≤ à celle des composants du commerce (plus ou moins 0.3 dB).

Ainsi, un premier objet de l'invention concerne un dispositif d'atténuation en ligne pour fibres monomodes placé entre deux fibres monomodes, comprenant au moins un élément atténuateur caractérisé en ce qu'il comporte au moins un tronçon de fibre multimode à gradient d'indice accolé à au moins un tronçon de fibre de silice sans coeur.

Selon une autre caractéristique de l'invention, l'élément atténuateur comporte au moins un autre tronçon de fibre de silice sans coeur, le tronçon de fibre à gradient d'indice étant placé entre les tronçons de fibres de silice sans coeur.

Selon une autre caractéristique, l'élément atténuateur a les mêmes paramètres géométriques extérieurs que les fibres monomodes auxquelles il est raccordé. Le raccord consiste avantageusement en une soudure.

Selon une autre caractéristique, le dispositif comprend une pluralité d'éléments atténuateurs disposés pour former un ruban ou un pavé de manière à être placés entre des rubans de fibres monomodes.

Un deuxième objet de l'invention concerne un procédé de fabrication d'un dispositif d'atténuation en ligne pour fibres monomodes, principalement caractérisé en ce qu'il consiste à effectuer successivement des étapes d'assemblage et de fractures de rubans de fibres monomodes de manière à obtenir deux rubans de fibres monomodes assemblés à travers un dispositif d'atténuation qui est obtenu par fracture d'au moins un ruban de fibres à gradient d'indice et assemblage à au moins un ruban de fibres de silice sans coeur fracturé.

Selon une autre caractéristique le procédé comporte une étape de fracture d'au moins un ruban de fibres de silice sans coeur et d'assemblage avec le ruban de fibre à gradient d'indice fracturé ainsi placé entre deux rubans de fibre de silice sans coeur.

Selon une autre caractéristique, le procédé de fabrication d'un dispositif d'atténuation en ligne pour fibres monomodes, comporte les étapes suivantes :
- assembler collectivement un ruban de n fibres multimodes à gradient d'indice à un ruban de n fibres de silice sans coeur,
- fracturer le ruban de n fibres de silice sans coeur de manière à obtenir n tronçons de longueur prédéterminée (Ls),
- assembler collectivement un ruban de n fibres monomodes aux n tronçons de silice sans coeur,
- fracturer le ruban de n fibres multimodes à gradient d'indice de manière à obtenir n tronçons de longueur prédéterminée (Lg),
- assembler collectivement un ruban de n fibres monomodes aux n tronçons de gradient d'indice.

Cette dernière étape est éventuellement remplacée par les étapes suivantes :
- assembler collectivement un ruban de n fibres de silice sans coeur aux n tronçons de gradient d'indice,
- fracturer le ruban de n fibres de silice sans coeur de manière à obtenir n tronçons de longueur prédéterminée (L's),
- assembler collectivement un ruban de n fibres monomodes aux n tronçons de silice sans coeur.

D'autres avantages et particularités de l'invention apparaîtront clairement à la lecture de la description qui est faite ci-après et qui est donnée à titre d'exemple illustratif et non limitatif en regard des dessins sur lesquels :
- la figure 1a) représente un mode particulier de réalisation de l'invention,
- les figures 1b) et 2 représentent un atténuateur selon respectivement un premier et un deuxième mode de réalisation préférentiel de l'invention;
- la figure 3 représente les atténuations en dB en fonction de différentes longueurs du tronçon de fibre à gradient d'indice dans le cas des modes de réalisation représentés sur les figures 1a et 1b;
- la figure 4 représente les atténuations en dB en fonction de différentes longueurs du tronçon de fibre à gradient d'indice dans le cas des modes de réalisation représentés sur les figures 1a) et 2 ;
- les figures 5a à 5e représentent les différentes étapes d'un procédé de fabrication selon l'invention;
- la figure 6a représente schématiquement l'opération de clivage;
- la figure 6b représente les différents niveaux d'atténuation en fonction de la longueur d'onde dans le cas d'un ruban de quatre fibres ;
- la figure 7 représente un banc de fracture de fibre pour réaliser des fractures de rubans selon le procédé de l'invention.

L'atténuateur selon l'invention repose sur le principe de la désadaptation du faisceau lumineux provenant d'une fibre monomode vers une autre fibre monomode.

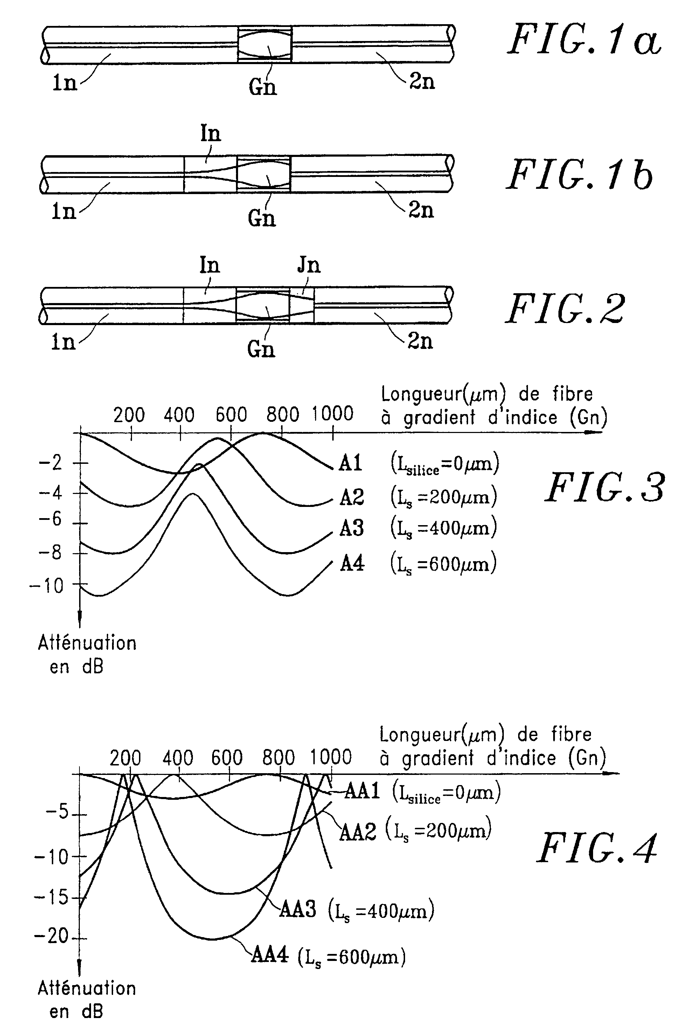

On peut se reporter pour la suite au schéma de la figure 1b) qui illustre un atténuateur selon un premier mode de réalisation préférentiel de l'invention.

Selon ce mode de réalisation, une fibre monomode 1n est reliée à une fibre monomode 2n à travers un tronçon de silice sans coeur In couplé à un tronçon de fibre à gradient d'indice Gn.

Le principe de l'atténuateur fonctionne sur la désadaptation des faisceaux lumineux et non sur l'absorption d'un matériau intermédiaire tel que c'est le cas pour les fibres atténuatrices par dopage.

L'avantage de l'utilisation d'une section non dopée entre les fibres monomodes (comme dans l'état de la technique) et par conséquent, l'avantage de la structure proposée par la présente invention, est que la taille et le rayon de courbure du faisceau lumineux sont contrôlés à volonté par le choix du tronçon de fibre à gradient d'indice.

La figure 2 illustre un deuxième mode de réalisation préférentiel selon l'invention.

Selon ce mode on a une fibre monomode 1n qui est couplée à une fibre monomode 2n à travers cette fois-ci d'une part le tronçon de fibre de silice In, le tronçon de fibre à gradient d'indice Gn et un autre tronçon de fibre de silice Jn.

Le fait d'ajouter un tronçon de silice supplémentaire Jn entre la fibre monomode et le gradient d'indice accroît la gamme d'atténuation réalisable.

On comprend bien que ces modes de réalisation ne sont pas les seuls et qu'il est possible de rajouter autant de tronçon de silice et de gradient d'indice qu'il est nécessaire entre les fibres monomodes en fonction de l'atténuation que l'on désire réaliser.

La modification de la taille et du rayon de courbure du faisceau gaussien entraîne des pertes de couplage correspondant au mauvais recouvrement des deux champs. Cette modification dépend de la longueur des différents tronçons de silice et de gradient d'indice.

Dans une fibre multimode à gradient d'indice, les faisceaux lumineux subissent une modification de leur constante de propagation le long de l'axe optique. La silice quant à elle est un milieu neutre, sans interaction, sur la propagation. L'utilisation de ces deux milieux permet de modifier la propagation de la lumière pour aller d'une fibre monomode à une autre. On peut déterminer alors les longueurs de ces différentes sections pour provoquer un mauvais recouvrement du faisceau sur la fibre monomode selon l'atténuation que l'on désire. En effet, à ces différents recouvrements des faisceaux, sont associées des pertes donc des atténuations.

On peut remarquer que même si le composant n'est pas symétrique du point de vue des longueurs et de la nature des sections, l'atténuation est équivalente dans un sens ou l'autre de la propagation dans celui-ci. On remarquera également que les tronçons de fibres représentés sur les figures 1b) et 2 ont les mêmes paramètres géométriques extérieurs que les fibres monomodes auxquelles ils sont assemblés. Cette caractéristique facilite l'utilisation de l'atténuateur ainsi que son procédé de fabrication en particulier lorsqu'il s'agit de rubans.

On va maintenant illustrer les résultats que l'on peut obtenir à partir d'un atténuateur conforme à l'invention à partir des courbes que l'on peut voir sur les figures 3 et 4. Tout d'abord, la figure 3 représente différentes courbes d'atténuation A1 à A4 correspondant respectivement aux variations de l'atténuation pour des longueurs Lg de tronçons de fibres à gradient d'indice variant de 0 à 1.000 micromètres, chacune des courbes étant obtenue pour une longueur de tronçon de silice Ls fixée. La courbe A1 est obtenue pour un tronçon de silice dont la longueur Ls = 0 micron, c'est-à-dire en l'absence de tronçon de silice ; l'atténuateur correspondant à cette courbe A1 est représenté figure la). La courbe A2 est obtenue pour un tronçon de silice de longueur Ls = 200 microns, la courbe A3, Ls = 400 microns et la courbe A4, Ls = 600 microns.

La figure 4 illustre le cas des différentes courbes d'atténuation pour un atténuateur double c'est-à-dire comportant deux tronçons de silice, un tronçon de part et d'autre du tronçon de fibre à gradient d'indice.

On obtient également différentes courbes d'atténuation respectivement référencées AA1, AA2, AA3, AA4. La courbe AA1 est obtenue lorsque les tronçons de silice Ls sont fixés à une longueur nulle, c'est-à-dire qu'il n'y a pas de tronçon de silice ; l'atténuateur correspondant à cette courbe AA1 est représenté figure 1a). La courbe AA2 est obtenue pour des variations de la longueur du tronçon à gradient d'indice entre 0 et 1.000 micromètres et des tronçons de silice ayant une longueur Ls = 200 micromètres. La courbe AA3, le tronçon de silice a une longueur Ls = 400 micromètres et la courbe AA4, les tronçons de silice ont une longueur Ls = 600 micromètres.

On va maintenant décrire le procédé de fabrication de tels atténuateurs selon la présente invention.

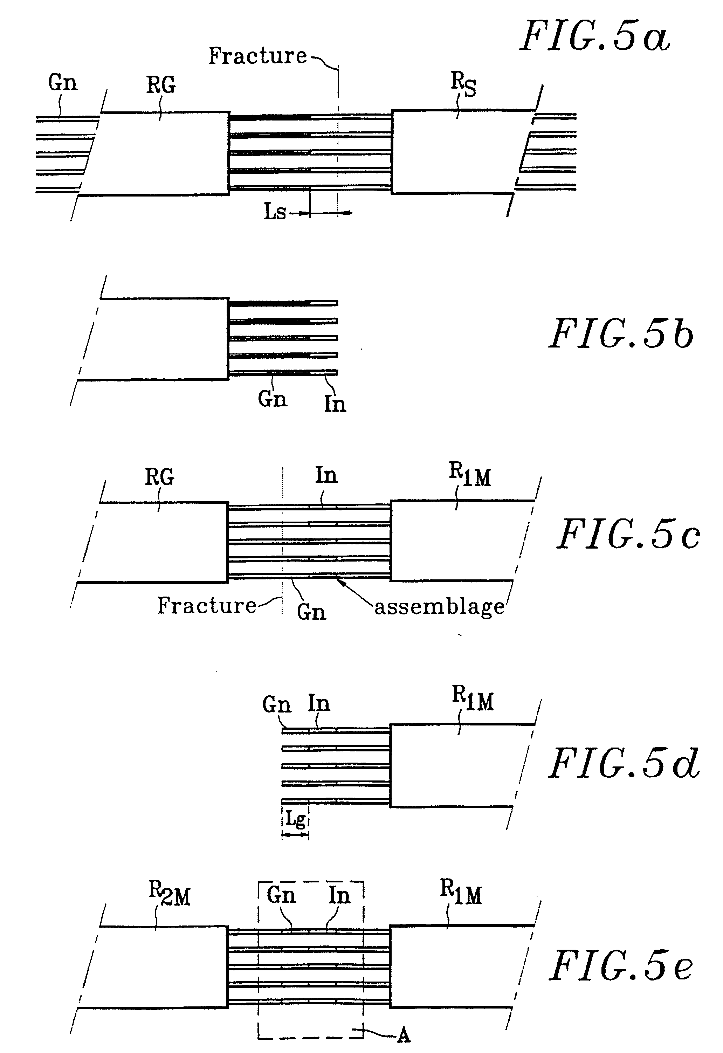

La technologie de ces atténuateurs est particulièrement bien adaptée à la fabrication directement à partir de rubans de fibres RG, RS telle que l'illustre la figure 5a.

Le caractère simple et reproductible de ces atténuateurs contribue à une réduction conséquente des coûts des composants ainsi obtenus.

La réalisation d'atténuateurs tels que représentés sur les figures 1a, 1b et 2 peut être obtenue de manière collective avec le procédé conforme à l'invention qui va être décrit dans la suite.

Ce procédé consiste à effectuer successivement des étapes d'assemblage et de fractures de rubans de fibres de manière à obtenir deux rubans de fibres monomodes assemblées à travers le dispositif d'atténuation qui est obtenu par au moins un ruban de fibres à gradient d'indice, fracturé.

Dans ce qui suit, on va détailler le procédé dans le cas d'une réalisation de dispositifs d'atténuation reposant sur le mode représenté sur la figure 1b).

De façon préférentielle, dans le procédé selon l'invention:
1.- on assemble par soudage collectivement un ruban RG de n fibres multimodes à gradient d'indice Gn à un ruban RS de n fibres de silice sans coeur In (figure 5a) ;
2.- on fracture le ruban RS de n fibres de silice sans coeur de manière à obtenir n tronçons de fibres In de longueur Ls (figure 5b) ;
3.- on soude un ruban de n fibres monomodes R1M aux n tronçons de silice sans coeur In (figure 5c) ;
4.- on fracture le ruban RG de n fibres multimodes Gn à gradient d'indice de manière à obtenir n tronçons de longueur Lg (figure 5d) ;
5.- on soude collectivement un ruban R2M de n fibres monomodes aux n tronçons de gradient d'indice (figure 5e).

Dans le cas d'atténuateur tel que représenté sur la figure 2, le procédé est identique en rajoutant une étape permettant d'avoir un tronçon de silice Jn entre le tronçon de gradient d'indice Gn et les fibres monomodes 2n.

Tout dispositif d'atténuation contenant x sections de silice et y sections de gradient d'indice entre deux rubans de fibres monomodes peut être obtenu de manière collective selon le procédé qui vient d'être décrit.

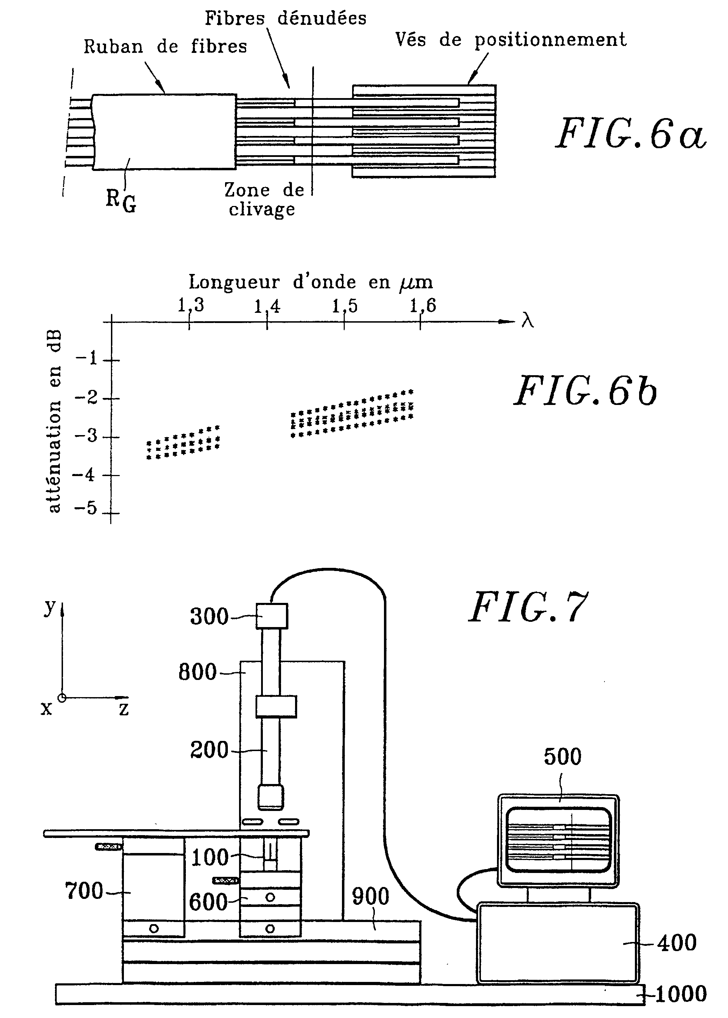

La figure 6b illustre des résultats expérimentaux. Cette figure présente des valeurs d'atténuation expérimentales d'un ruban de quatre fibres dans les fenêtres de longueur d'onde λ variant entre 1.3 et 1.6 micromètres pour une longueur de tronçon de fibre à gradient d'indice Lg = 400 micromètres. Ces résultats expérimentaux montrent que l'influence de la longueur d'onde sur l'atténuation est tout à fait comparable aux techniques d'atténuation existantes.

Le procédé de fabrication collectif qui a été décrit peut être mis en oeuvre à partir d'un banc de fractures des rubans de fibres tel que cela est représenté sur la figure 7.

Toutefois, ce banc comporte une pièce de guidage des fibres pour améliorer la précision de clivage, représentée sur la figure 6a. En effet, pour mieux conserver l'alignement des fibres dénudées au pas de 250 µm, il faut guider l'extrémité des fibres pour limiter leur épanouissement. Des vés de positionnements au pas de 250 µm sont disposés sur la cliveuse pour maintenir un parallélisme des fibres. Cette pièce de guidage apporte une meilleure efficacité au clivage de précision et une meilleure homogénéité des longueurs.

La soudure des rubans de fibres peut être réalisée par une soudeuse à ruban standard.

L'observation des différentes étapes décrites précédemment se fait à l'aide d'un vidéo-microscope 200 à éclairage annulaire placé au-dessus du rail 900 qui supporte la pince à fracturer 100.

Il s'agit d'une pince à fracturer les rubans, par exemple telle que la pince commercialisée par la société FUJIKURA. Toute pince à fracturer collective pouvant convenir dans la mesure où elle permet une observation de la zone de fracture par le dessus.

Le vidéo-microscope 200 est relié à une caméra 300 dont l'image s'affiche sur un moniteur vidéo 500 après traitement par un système de mesure de distances 400. Ce système projette des droites que l'on peut déplacer sur l'écran et permet moyennant un étalonnage préalable de mesurer les distances.

La pince à fracturer 100 peut se déplacer suivant les trois directions x y et z à l'aide du bloc 600 comprenant une platine manuelle de déplacement micrométrique, lui-même fixé au rail 900 par l'intermédiaire d'un cavalier. On déplace le ruban de fibres suivant l'axe optique z à l'aide du bloc 700 qui comprend une platine manuelle de déplacement micrométrique reliée au même rail 900 par un cavalier. Ce degré de liberté suivant l'axe optique z permet d'amener le plan de soudure à l'endroit voulu par rapport au couteau de la pince à fracturer.

L'alignement entre le plan de soudure et la trace du couteau se fait de manière visuelle à l'aide du vidéo-microscope. Le déplacement du ruban est ajusté à la côte voulue grâce au système de mesure 400. Le vidéo-microscope est maintenu par une potence 800, l'ensemble étant supporté par un socle stable 1000.

## Revendications

1. Dispositif d'atténuation en ligne pour fibres monomodes placé entre deux fibres monomodes (1n, 2n), comprenant au moins un élément atténuateur **caractérisé en ce qu'**il comporte au moins un tronçon de fibre multimode à gradient d'indice (Gn) accolé à au moins un tronçon de fibre de silice sans coeur (In).

2. Dispositif d'atténuation en ligne selon la revendication 1, **caractérisé en ce que** l'élément atténuateur comporte au moins un autre tronçon de fibre de silice sans coeur (Jn), le tronçon de fibre à gradient d'indice (Gn) étant placé entre les tronçons de fibres de silice sans coeur (In, Jn).

3. Dispositif d'atténuation en ligne selon l'une des revendications 1 ou 2 **caractérisé en ce que** l'élément atténuateur a les mêmes paramètres géométriques extérieurs que les fibres monomodes auxquelles il est raccordé.

4. Dispositif d'atténuation en ligne selon la revendication 3 **caractérisé en ce que** le raccord consiste en une soudure des extrémités des fibres en regard.

5. Dispositif d'atténuation en ligne selon l'une quelconque des revendications précédentes, **caractérisé en ce qu'**il comprend une pluralité d'éléments atténuateurs (A) disposés pour former un ruban ou un pavé de manière à être placés entre des rubans de fibres monomodes (R_{1M}, R_{2M}).

6. Procédé de fabrication d'un dispositif d'atténuation en ligne pour fibres monomodes, **caractérisé en ce qu'**il consiste à effectuer successivement des étapes d'assemblage et de fracture de rubans de fibres de manière à obtenir deux rubans de fibres monomodes (R_{1M}, R_{2M}) assemblés à travers le dispositif d'atténuation qui est obtenu par fracture d'au moins un ruban de fibres à gradient d'indice(RG) et assemblage à au moins un ruban de fibres de silice sans coeur (R_{S}) fracturé.

7. Procédé de fabrication d'un dispositif d'atténuation en ligne pour fibres monomodes selon la revendication 6 **caractérisé en ce qu'**il comporte la fracture d'un autre ruban de fibres de silice sans coeur (R_{S}) et l'assemblage au ruban de fibres à gradient d'indice fracturé (RG) ainsi placé entre deux rubans de fibre de silice sans coeur.

8. Procédé de fabrication d'un dispositif d'atténuation en ligne pour fibres monomodes, selon l'une des revendications 6 à 7, **caractérisé en ce qu'**il comporte les étapes suivantes :
- assembler collectivement un ruban de n fibres multimodes à gradient d'indice (RG) à un ruban de n fibres de silice sans coeur (R_{S}),
- fracturer le ruban de n fibres de silice sans coeur (R_{S}) de manière à obtenir n tronçons (In) de longueur prédéterminée (Ls),
- assembler collectivement un ruban de n fibres monomodes (R_{1M}) aux n tronçons de silice sans coeur (In),
- fracturer le ruban de n fibres multimodes à gradient d'indice (RG) de manière à obtenir n tronçons (Gn) de longueur prédéterminée (Lg),
- assembler collectivement un ruban de n fibres (R_{2M}) monomodes aux n tronçons de gradient d'indice (Gn).

9. Procédé de fabrication d'un dispositif d'atténuation en ligne pour fibres monomodes, selon la revendication 8, **caractérisé en ce que** la dernière étape est remplacée par les étapes suivantes :
- assembler collectivement un ruban de n fibres de silice sans coeur (R_{S}) aux n tronçons de gradient d'indice (Gn),
- fracturer le ruban de n fibres de silice sans coeur (R_{S}) de manière à obtenir n tronçons (Jn) de longueur prédéterminée (L's),
- assembler collectivement un ruban de n fibres (R_{2M}) monomodes aux n tronçons de silice sans coeur (Jn).

## Patentansprüche

1. Dämpfungsglied für Monomodefasern, angeordnet zwischen zwei Monomodefasern (1n, 2n), wenigstens ein Dämpfungselement umfassend,
**dadurch gekennzeichnet, dass** es wenigstens ein Teilstück einer Monomodefaser mit Indexgradient (Gn) umfasst, angefügt an wenigstens ein Siliciumdioxidfaser-Teilstück ohne Kern (In).

2. Dämpfungsglied nach Anspruch 1, **dadurch gekennzeichnet, dass** das Dämpfungselement wenigstens ein anderes Siliciumdioxidfaser-Teilstück ohne Kern (Jn) umfasst, wobei das Faserteilstück mit Indexgradient (Gn) sich zwischen den Siliciumdioxidfaser-Teilstücken ohne Kern (In, Jn) befindet.

3. Dämpfungsglied nach einem der Ansprüche 1 oder 2, **dadurch gekennzeichnet, dass** das Dämpfungselement dieselben geometrischen Außenparameter wie die Monomodefasem aufweist, mit denen es verbunden ist.

4. Dämpfungsglied nach Anspruch 3, **dadurch gekennzeichnet, dass** die Verbindung durch eine Verschweißung der Enden der betreffenden Fasern gebildet wird.

5. Dämpfungsglied nach einem der vorangehenden Ansprüche, **dadurch gekennzeichnet, dass** es eine Vielzahl von Dämpfungselementen (A) umfasst, die streifenoder blockförmig zwischen Monomodefaserbändern (R_{1M}, R_{2M}) angeordnet sind.

6. Herstellungsverfahren eines Monomodefaser-Dämpfungsglieds, **dadurch gekennzeichnet, dass** es darin besteht, nacheinander Schritte des Zusammenfügens und Brechens von Faserbändern durchzuführen, um zwei Monomodefaserbänder (R_{1M}, R_{2M}) zu erhalten, die durch das Dämpfungsglied zusammengefügt werden, das man durch Brechen wenigstens eines Bands aus Indexgradientenfasern (RG) und Zusammenfügen mit wenigstens einem gebrochenen Band aus kernlosen Silixiumdioxidfasern (R_{S}) erhält.

7. Herstellungsverfahren eines Dämpfungsglieds für Monomodefasern nach Anspruch 6, **dadurch gekennzeichnet, dass** es das Brechen eines anderen Bandes aus kernlosen Siliciumdioxidfasern (R_{S}) und Zusammenfügen mit dem abgebrochenen Indexgradientenfaserband (RG) umfasst, das sich also zwischen zwei Bändern aus kernlosen Siliciumdioxidfasern befindet.

8. Herstellungsverfahren eines Dämpfungsglieds für Monomodefasern nach einem der Ansprüche 6 und 7, **dadurch gekennzeichnet, dass** es die folgenden Schritte umfasst:
- kollektives Zusammenfügen eines Bands aus n Multimodefasem mit Indexgradient (RG) mit einem Band aus n kernlosen Siliciumdioxidfasern (R_{S}),
- Brechen des Bands aus n kernlosen Siliciumdioxidfasern (R_{S}), um n Teilstücke (In) von bestimmter Länge (Ls) zu erhalten,
- kollektives Zusammenfügen eines Bandes mit n Monomodefasern (R_{1M}) mit n kernlosen Siliciumdioxidfaser-Teilstücken (In),
- Brechen des Bands mit n Multimodefasern mit Indexgradient (RG), um n Teilstücke (Gn) von bestimmter Länge (Lg) zu erhalten,
- kollektives Zusammenfügen eines Bands aus n Monomodefasern (R_{2M}) mit den n Teilstücken mit Indexgradient (Gn).

9. Herstellungsverfahren eines Dämpfungsglieds für Monomodefasern nach Anspruch 8, **dadurch gekennzeichnet, dass** der letzte Schritt durch die folgenden Schritte ersetzt wird:
- kollektives Zusammenfügen eines Bands aus n kernlosen Siliciumdioxidfasern (R_{S}) mit den n Teilstücken mit Indexgradient (Gn),
- Brechen des Bands aus n kernlosen Siliciumdioxidfasern (R_{S}), um n Teilstücke (Jn) von bestimmter Länge (L's) zu erhalten,
- kollektives Zusammenfügen eines Bands aus n Monomodefasern (R_{2M}) mit n Teilstücken von kernlosen Siliciumdioxidfasern (Jn).

## Claims

1. Line attenuation device for monomode fibres placed between two monomode fibres (1n, 2n), comprising at least one attenuating element, **characterised in that** it comprises at least one section of graded-index multimode fibre (Gn) joined to at least one section of coreless silica fibre (In).

2. Line attenuation device according to claim 1, **characterised in that** the attenuating element comprises at least one other section of coreless silica fibre (Jn), the section of graded-index fibre (Gn) being placed between the sections of coreless silica fibres (In, Jn).

3. Line attenuation device according to one of claims 1 or 2, **characterised in that** the attenuating element has the same external geometric parameters as the monomode fibres to which it is connected.

4. Line attenuation device according to claim 3, **characterised in that** the connection consists of fusing of the ends of the facing fibres.

5. Line attenuation device according to any one of the preceding claims, **characterised in that** it comprises a plurality of attenuating elements (A) disposed to form a ribbon or a block so as to be placed between ribbons of monomode fibres (R_{1M}, R_{2M}).

6. Method for production of a line attenuation device for monomode fibres, **characterised in that** it consists in successively carrying out assembling and breaking steps on ribbons of fibres so as to obtain two ribbons of monomode fibres (R_{1M}, R_{2M}) assembled through the attenuation device which is obtained by breaking at least one ribbon of graded-index fibres (RG) and assembly to at least one broken ribbon of coreless silica fibres (R_{S}).

7. Method for production of a line attenuation device for monomode fibres according to claim 6, **characterised in that** it comprises breaking another ribbon of coreless silica fibres (R_{S}) and assembly to the fractured ribbon of graded-index fibres (RG) thus placed between two ribbons of coreless silica fibres.

8. Method for production of a line attenuation device for monomode fibres according to one of claims 6 to 7, **characterised in that** it comprises the following steps:
- collectively assembling a ribbon of n graded-index multimode fibres (RG) to a ribbon of n coreless silica fibres (R_{S}) ;
- breaking the ribbon of n coreless silica fibres (R_{S}) so as to obtain n sections (In) of predetermined length (Ls)
- collectively assembling a ribbon of n monomode fibres (R_{1M}) to the n sections of coreless silica (In);
- breaking the ribbon of n graded-index multimode fibres RG so as to obtain n sections (Gn) of predetermined length (Lg);
- collectively assembling a ribbon of n monomode fibres (R_{2M}) to the n sections of graded index (Gn).

9. Method for production of a line attenuation device for monomode fibres according to claim 8, **characterised in that** the last step is replaced by the following steps:
- collectively assembling a ribbon of n coreless silica fibres (R_{S}) to the n sections of graded index (Gn);
- breaking the ribbon of n coreless silica fibres (R_{S}) so as to obtain n sections (Jn) of predetermined length (L's);
- collectively assembling a ribbon of n monomode fibres (R_{2M}) to the n sections of coreless silica (Jn).
